## Europäisches Patentamt

## European Patent Office

## Office européen des brevets

(19)

(11) Veröffentlichungsnummer: **0 254 931**
**B1**

(12) # EUROPÄISCHE PATENTSCHRIFT

(45) Veröffentlichungstag der Patentschrift:
25.10.89

(51) Int. Cl.⁴: **B23K 11/30**

(21) Anmeldenummer: 87109957.8

(22) Anmeldetag: 10.07.87

(54) **Wechseleinrichtung für Schweisselektroden.**

(30) Priorität: 18.07.86 AT 1959/86

(43) Veröffentlichungstag der Anmeldung:
03.02.88 Patentblatt 88/5

(45) Bekanntmachung des Hinweises auf die Patenterteilung:
25.10.89 Patentblatt 89/43

(84) Benannte Vertragsstaaten:
BE CH DE ES FR GB GR IT LI LU NL SE

(56) Entgegenhaltungen:
DE-A- 3 323 038

(73) Patentinhaber: STIWA-Fertigungstechnik Sticht
Gesellschaft m.b.H, Steinhüblstrasse 4,
A-4800 Attnang-Puchheim(AT)

(72) Erfinder: Sticht, Walter,
Karl-Heinrich-Waggerl-Strasse 8,
A-4800 Attnang-Puchheim(AT)
Erfinder: Schwankhart, Gerhard, Tuffeltsham 68,
A-4800 Attnang-Puchheim(AT)

(74) Vertreter: Wolke, Heidemarie, Dr., Stadtplatz 7,
A-4400 Steyr(AT)

ACTORUM AG

## Beschreibung

Die Erfindung betrifft eine Wechseleinrichtung für mehrere aufeinanderfolgend eingesetzte und in einem für diese gemeinsamen Elektrodenhalter angeordnete Schweißelektroden, mit einer Fixiervorrichtung für den in einer Lagervorrichtung verstellbar gehaltenen Elektrodenhalter und mit einer Zustellvorrichtung für die Lagervorrichtung sowie einer Stromquelle für die Schweißelektroden.

Es sind bereits Wechseleinrichtungen für Schweißelektroden bekannt, wobei die einzelnen Schweißelektroden auf einem Elektrodenhalter angeordnet sind. Der Elektrodenhalter ist über eine Führungsvorrichtung in einer Lagervorrichtung geführt und kann mit einer Fixiervorrichtung in seiner Lage gegenüber der Lagervorrichtung derart fixiert werden, daß eine der auf diesen angeordneten Schweißelektroden sich in einer vom Werkstück distanzierten Ruheposition befindet, aus der der Elektrodenhalter bzw. die jeweils zum Einsatz gelangende Schweißelektrode in eine am Werkstück anliegende Arbeitsstellung verbracht werden kann. Bei diesen Vorrichtungen war es notwendig, die einzelnen Schweißelektroden jeweils einzeln mit der Stromquelle zu verbinden.

Wurde dagegen der gesamte Elektrodenhalter kontaktiert, kam es bei der Zuleitung zwischen Stromquelle und Elektrodenhalter vor allem im Bereich der Lagerung in der Lagervorrichtung oft zu störenden Lichtbogen, die die Funktionstüchtigkeit der Anlage beeinträchtigen bzw. den Elektrodenhalter zerstörten.

Der vorliegenden Erfindung liegt die Aufgabe zugrunde, eine Wechseleinrichtung für mehrere aufeinanderfolgend einzusetzende Schweißelektroden zu schaffen, mit der ein rascher Wechsel der Schweißelektroden möglich ist und eine einwandfreie und störungsfreie Stromübertragung von der Lagervorrichtung über den Elektrodenhalter zu den einzelnen Schweißelektroden erreicht werden kann.

Diese Aufgabe der Erfindung wird dadurch gelöst, daß dem Elektrodenhalter eine Führungsvorrichtung zugeordnet ist und der Elektrodenhalter und die Führungsvorrichtung mit gegengleichen, bedarfsweise zur Drehung des Elektrodenhalters in Eingriff bringbaren Kupplungsteilen einer Kupplungsvorrichtung versehen sind und daß dem Elektrodenhalter zur Verstellung relativ zur Lagervorrichtung eine Verstellvorrichtung zugeordnet ist und daß die Schweißelektroden über die Lagervorrichtung mit der Stromquelle, z.B. Schweißtrafo, verbunden sind. Durch die scheinbar überraschend einfache Lösung wird erreicht, daß der Elektrodenhalter in der Lagervorrichtung jeweils festgespannt werden kann, um eine möglichst große Fläche ohne störenden Luftspalt zur Stromübertragung zwischen Elektrodenhalter und Lagervorrichtung zur Verfügung zu haben. Dies ist dadurch möglich, da die Führungsvorrichtung während des Einsatzes der Schweißelektroden von den Schweißelektroden bzw. dem Elektrodenhalter distanziert ist, sodaß es im Bereich der Führungsvorrichtung zu keinen Stromüberschlägen oder Lichtbogenbildungen zwischen diesen und dem Elektrodenhalter kommen kann.

Gemäß einer weiteren vorteilhaften Ausführungsform der Erfindung ist vorgesehen, daß zumindest ein Kupplungsteil der Kupplungsvorrichtung mit der Verstellvorrichtung gekuppelt ist, wodurch mit dem Einkuppeln der Führungsvorrichtung über diese gleichzeitig auch die Verschwenkung des Elektrodenhalters bzw. der einzelnen Schweißelektroden vorgenommen werden kann.

Weiters ist es auch möglich, daß die Lagervorrichtung als Klemmvorrichtung ausgebildet ist und zwei mittels einer Fixiervorrichtung relativ gegenüber dem Elektrodenhalter verstellbare Klemmbacken umfaßt, wodurch eine direkte satte Anlage zwischen dem Elektrodenhalter und der Lagervorrichtung gegeben ist, sodaß günstige Stromleitungseigenschaften erzielt werden.

Von Vorteil ist es aber auch, wenn die Lagervorrichtung U-förmig ausgebildet ist und die beiden Schenkel die Klemmbacken bilden und in deren Endbereich die Fixiervorrichtung angeordnet ist, welche auf die beiden Schenkel eine aufeinander zugerichtete Spannkraft ausübt, da dadurch eine massive Ausbildung der Lagervorrichtung möglich ist, über die auch beim Schweißen notwendige Andrückkräfte einwandfrei übertragen werden können.

Nach einer anderen Ausführungsvariante ist vorgesehen, daß die U-förmige Lagervorrichtung im Bereich des Steges über eine Isoliervorrichtung mit der Zustellvorrichtung verbunden ist, wodurch eine stabile Verbindung zwischen der Lagervorrichtung und den die Schweiß- und Verstellkräfte ausübenden Vorrichtungen möglich ist, da diese Verbindung fix angeordnet sein kann.

Vorteilhaft ist es weiters, wenn der Elektrodenhalter mit einem zylinder- oder prismenförmigen Ansatz bewegungsverbunden ist, der in einer zwischen den Schenkeln und bzw. oder dem Steg befindlichen Aufnahmekammer der Lagervorrichtung angeordnet und von diesem umfaßt ist, wobei eine Querschnittsform der Aufnahmekammer einer Querschnittsform des Ansatzes entspricht, wodurch eine verdrehsichere Halterung erzielt und die Schweißelektroden einfach auf unterschiedliche Einsatzlagen justiert werden können.

Nach einer anderen Ausführungsform der Erfindung ist vorgesehen, daß der Elektrodenhalter plattenförmig ausgebildet ist und an dessen umlaufender Stirnfläche Aufnahmen für die Schweißelektroden angeordnet sind und daß der Ansatz senkrecht zur plattenförmigen Oberfläche angeordnet ist und in seinem von der Oberfläche distanzierten Endbereich mit einer Kupplungsscheibe verbunden ist, wodurch in einfacher Weise eine größere Anzahl von Schweißelektroden auf einem derartigen Elektrodenhalter angeordnet werden kann.

Weiters ist es auch möglich, daß auf der dem Ansatz gegenüberliegenden Oberfläche ein weiterer Kupplungsteil angeordnet ist, der vorzugsweise als konischer Führungszapfen ausgebildet ist, wodurch die stromübertragenden Flächen durch die Führungsfunktion bei der Verstellung des Elektrodenhalters nicht beansprucht werden und dort vorgesehene hochleitende Beschichtungen, beispielsweise Goldauflagen nicht beschädigt werden.

Vorteilhaft ist es aber auch, wenn die den beiden Kupplungsteilen der Lagervorrichtung zugeordneten verstellbaren Kupplungteile der Kupplungsvorrichtung entlang einer in radialer Richtung zum Ansatz verlaufenden Führungsbahn gemeinsam verstellbar gelagert sind und in axialer Richtung zum Ansatz unabhängig voneinander und relativ zueinander verstellbar sind, da dadurch eine rasche und einfache Positionierung der Führungsvorrichtung relativ zum Elektrodenhalter erreicht wird.

Es ist aber auch möglich, daß die Kupplungsvorrichtung als Klauenkupplung ausgebildet ist und der am Ansatz angeordnete Kupplungteil und der dieser gegenüberliegende Kupplungteil der Führungsvorrichtung jeweils durch eine Kupplungsscheibe gebildet ist, sodaß eine lagegenaue Halterung des Elektrodenhalters auch nach dem Lösen der Klemmverbindung zwischen der Lagervorrichtung und dem Elektrodenhalter erzielt wird.

Vorteilhaft ist es weiters, wenn der dem Führungsdorn gegenüberliegende Kupplungteil der Führungsvorrichtung durch eine sich konisch verjüngende Führungsbohrung gebildet ist, da dadurch beim Kuppeln der Führungsvorrichtung mit dem Elektrodenhalter eine selbsttätige Zentrierung der beiden Teile aufeinander erfolgt.

Zum besseren Verständnis der Erfindung wird diese im nachfolgenden anhand der in den Zeichnungen dargestellten Ausführungsbeispiele näher erläutert.

Es zeigen:

Fig. 1 eine Wechseleinrichtung nach der Erfindung in vereinfachter schaubildlicher Darstellung;

Fig. 2 die dem Elektrodenhalter zugeordnete Führungs- und Verstellvorrichtung in Seitenansicht und vereinfachter Darstellung teilweise geschnitten;

Fig. 3 den Elektrodenhalter in Draufsicht teilweise geschnitten;

Fig. 4 eine Arbeitsstation zum Schweißen mit einer erfindungsgemäß ausgebildeten Wechseleinrichtung in Draufsicht und vereinfachter Darstellung;

Fig. 5 eine Ausführungsvariante einer Führungs- und Verstellvorrichtung für einen Elektrodenhalter in Seitenansicht teilweise geschnitten;

Fig. 6 einen Elektrodenhalter für den Einsatz von gekühlten Elektroden in Seitenansicht;

Fig. 7 einen Einsatzteil des Elektrodenhalters nach Fig.6 in Seitenansicht geschnitten mit einer in dem Einsatzteil (eingesetzten auswechselbaren Elektrode;

Fig. 8 den Einsatzteil des Elektrodenhalters nach Fig.6 und 7 bei davon entfernter Elektrode;

Fig. 9 ein Blockschaltbild einer Steuervorrichtung für eine Arbeits- bzw. Bearbeitungsstation einer Montagemaschine mit einer Schweißeinrichtung und einer Wechseleinrichtung für die Schweißelektroden.

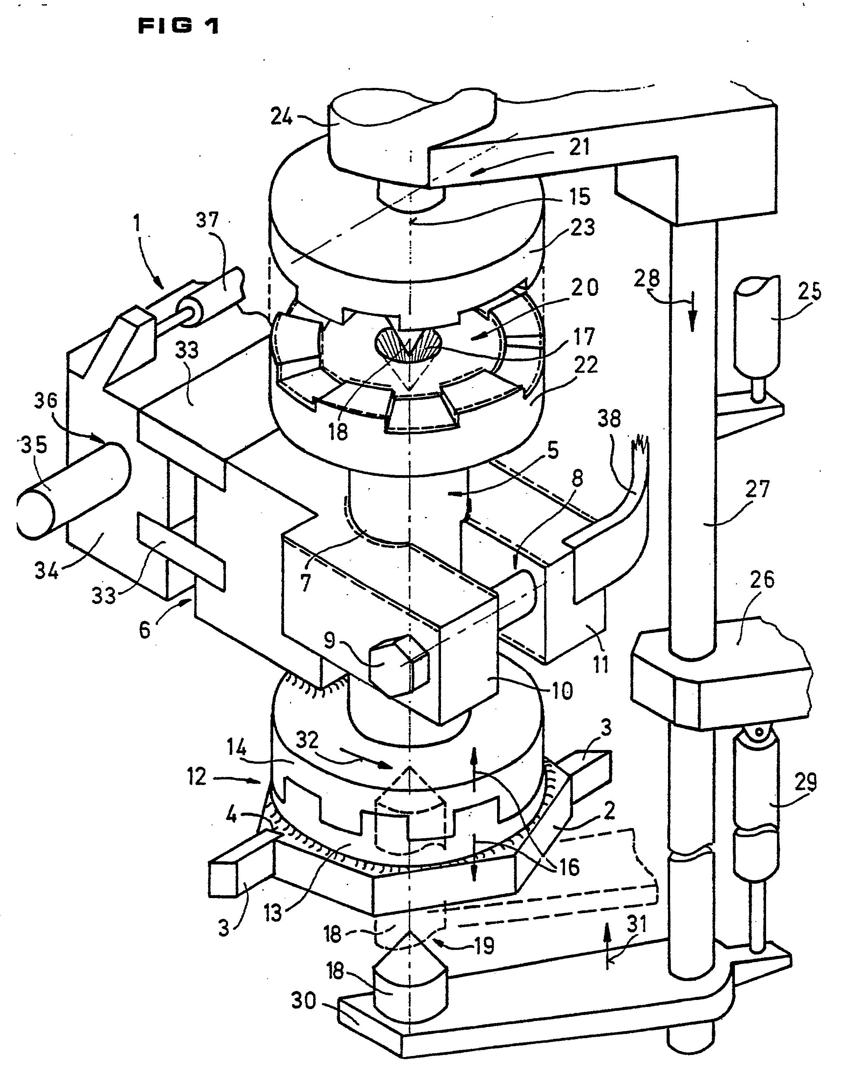

In Fig.1 ist eine Wechseleinrichtung 1 für mehrere auf einen gemeinsamen Elektrodenhalter 2 angeordnete Schweißelektroden 3 dargestellt. Die Schweißelektroden 3 sind in Aufnahmen 4 stirnseitig in dem scheiben- bzw. plattenförmigen Elektrodenhalter 2 eingesetzt. Der Elektrodenhalter 2 weist einen zylinder- oder prismenförmigen Ansatz 5 auf, der sich senkrecht zur plattenförmigen Oberfläche des Elektrodenhalters 2 erstreckt. Der Ansatz 5 und der Elektrodenhalter 2 können einstückig ausgebildet sein, aber es sich auch möglich, daß der Ansatz 5 über Befestigungsmittel mit dem Elektrodenhalter 2 bewegungsverbunden ist. Dem Ansatz 5 ist eine Lagervorrichtung 6 zugeordnet, die eine in ihrem Querschnitt zumindest teilweise an den Querschnitt des Ansatzes angepaßte Öffnung 7 aufweist. Zum spielfreien Festhalten des Ansatzes 5 in der Lagervorrichtung 6 ist eine Fixiervorrichtung 8 vorgesehen. Beim vorliegenden Ausführungsbeispiel wird die Fixiervorrichtung 8 durch eine Spannschraube 9 gebildet, die zwischen zwei Schenkeln 10 und 11 der U-förmig ausgebildeten Lagervorrichtung 6 derart angeordnet ist, daß sich der Ansatz zwischen der Fixiervorrichtung 8 und einem die beiden Schenkel 10 und 11 verbindenden Steg der Lagervorrichtung 6 befindet.

Zwischen der Lagervorrichtung 6 und dem Elektrodenhalter 2 ist eine Kupplungsvorrichtung 12 angeordnet, die beim dargestellten Ausführungsbeispiel durch eine Klauenkupplung gebildet ist. Eine Kupplungsscheibe 13 der Kupplungsvorrichtung 12 ist mit dem Elektrodenhalter 2 fest verbunden. Die dieser gegenüberliegende Kupplungsscheibe 14 ist mit der Lagervorrichtung 6 bewegungsverbunden. Die beiden Kupplungsscheiben 13,14 sind in Längsrichtung einer Drehachse 15 des Ansatzes 5 bzw. Elektrodenhalters 2 in Richtung eines Doppelpfeiles 16 relativ zueinander verstellbar. Zur Führung des Elektrodenhalters 2 ist diesem bzw. dem Ansatz 5 eine aus einer Führungsbohrung 17 und einem Führungsdorn 18 bestehende Führungsvorrichtung 19 zugeordnet. Die Führungsbohrung 17 ist in einer dem Ansatz 5 gegenüberliegenden plattenförmigen Oberfläche des Elektrodenhalters 2 angeordnet und dieser ist in Art eines Mitlaufkörners ausgebildete Führungsdorn 18, der in Längsrichtung der Drehachse 15 entsprechend dem Doppelpfeil 16 relativ gegenüber der Führungsbohrung 17 verstellbar ist, zugeordnet. Die Führungsbohrung 17 und der Führungsdorn 18 bilden eine Führungsvorrichtung 19. Eine weitere Führungsvorrichtung 20 ist dem vom Elektrodenhalter 2 abgewandten Endbereich des Ansatzes 5 zugeordnet, wobei diese Führungsvorrichtung 20 gleichartig wie die Führungsvorrichtung 19 ausgebildet ist und aus einer im Ansatz 5 angeordneten Führungsbohrung 17 und einem dieser zugeordneten Führungsdorn 18, welcher entsprechend dem Doppelpfeil 16 relativ zum Ansatz 5 verstellbar ist, besteht. Der Führungsdorn 18 ist mit einer Verstellvorrichtung 21 verbunden, die aus einer mit dem Ansatz 5 bewegungsverbundenen Kupplungsscheibe 22 und einer gegenüber dieser verstellbaren Kupplungsscheibe 23 besteht, die mit einem Antriebsmotor 24 gekuppelt ist. Durch die Verstellbarkeit der Kupplungsscheibe 23 wirken die beiden Kupplungsscheiben 22 und 23 als Kupplungsvorrichtung und es kann durch Beaufschlagung des Antriebsmotors 24 der Ansatz 5 mit dem Elektrodenhalter 2 um die Drehachse 15 jeweils so weit verschwenkt werden, daß eine Schweißelektrode 3 nach der anderen in die Arbeits- bzw. Einsatzposition geschwenkt werden kann.

Bevor der Elektrodenhalter verschwenkt werden kann, ist es erforderlich, die Führungsdorne 18 in Eingriff mit den Führungsbohrungen 17 zu bringen, sodaß sich die Kupplungsscheibe 23 in Eingriff mit der Kupplungsscheibe 22 befindet, wie dies mit strichlierten Linien angedeutet ist. Dazu wird über einen Verstellantrieb 25 eine in einem Gehäuse 26 geführte Führungssäule 27, die den Antriebsmotor 24 lagert, in Richtung auf den Ansatz 5 - Pfeil 28 - abwärts verstellt, bis die beiden Kupplungsscheiben 22 und 23 in Eingriff sind. Danach wird mit einem Verstellantrieb 29 ein den Führungsdorn 18 der Führungsvorrichtung 19 lagernder Schwenkarm 30 in seinen mit strichlierten Linien angedeutete Lage in Richtung des Pfeiles 31 verstellt, sodaß der Ansatz 5 mit dem Elektrodenhalter 2 zwischen den beiden Führungsdornen 18 der Führungsvorrichtungen 19 und 20 festgeklemmt ist. Danach wird die Fixiervorrichtung 8 also die Spannschraube 9 gelöst, sodaß die Schenkel 10,11, die mit strichlierten Linien angedeutete Stellung einnehmen und der Ansatz 5 in der Öffnung 7 der Lagervorrichtung 6 freigestellt ist. Danach wird mit dem Verstellantrieb 25 bei unveränderter Lage der Führungsdorne 18 der Führungsvorrichtungen 19 und 20 die Führungssäule 27 in Richtung des Pfeiles 28 nach unten verstellt, sodaß die beiden Kupplungsscheiben 13 und 14 außer Eingriff kommen. Danach wird der Antriebsmotor 24 beaufschlagt und der Elektrodenhalter 2 in der durch einen Pfeil 32 angedeuteten Richtung soweit verschwenkt, daß die nächste zum Einsatz vorgesehene Schweißelektrode sich in der Einsatzstellung befindet.

Die Lagervorrichtung 6 ist weiters über Isolierelemente 33 mit einem Halter 34 verbunden, welcher entlang einer durch Führungssäulen 35 gebildeten Führungsbahn 36 mittels eines Verstellantriebes 37, beispielsweise eines Druckmittel beaufschlagbaren Zylinderkolbenantriebes verstellbar ist. Entlang dieser Füh rungsbahn 36 kann die Lagervorrichtung und damit der in dieser festgespannte Elektrodenhalter 2 mit seiner Schweißelektrode 3 zur Anlage an dem zu schweißenden Werkstück gebracht werden. Mittels dem Verstellantrieb 37 wird auch die zum Schweißen notwendige Anpreßkraft auf das Werkstück ausgeübt.

Der Antriebsmotor 24 kann selbstverständlich auch durch einen Druckmittel betätigbaren Schwenkzylinder oder einen entsprechenden anderen Drehantrieb gebildet werden, wobei den Kupplungsscheiben 22, 23 oder dem Ansatz 5 bzw. dem Elektrodenhalter 2 entsprechende Anschläge zugeordnet sein können, um die Positionierung der aufeinanderfolgend zum Einsatz gelangenden Schweißelektroden 3 vornehmen zu können. Es ist aber auch möglich, als Antriebsmotor 24 einen Schrittschaltmotor zu verwenden, sodaß über den Schrittschaltmotor die Positionierung der einzelnen Schweißelektroden in der Arbeitsposition erfolgen kann. Mit diesem Antriebsmotor 24 ist der Ansatz 5 bzw. der Elektrodenhalter 2 gegenüber der Lagervorrichtung 6 in eine Stellung zu verbringen, in der nach dem Verdrehen des Elektrodenhalters 2 die Klauen der Kupplungsscheiben 13 und 14 der Kupplungsvorrichtung 12 wieder in Eingriff gebracht werden können, um die jeweilige Drehstellung des Elektrodenhalters 2 gegenüber der Lagervorrichtung 6 zu fixieren.

Mit dem Verstellantrieb 29 kann die Lagervorrichtung 6 mit dem darin eingespannten Elektrodenhalter 2 zwischen die beiden Führungsdorne 18 verbracht und durch Einführen der Führungsdorne 18 in die Führungsbohrungen 17 mittels schematisch angedeuteter Verstellantriebe 25,29 positioniert werden. Danach anschließend werden die beiden Verstellantriebe 25,29 über ein Steuerglied einer Steuervorrichtung gleichsinnig beaufschlagt und beispielsweise der Führungsdorn 18 der oberen Führungsvorrichtung 20 in Richtung der unteren Führungsvorrichtung 19 gemeinsam mit dem Ansatz 5 und dem Elektrodenhalter 2 bewegt, sodaß die Kupplungsscheiben 13 und 14 der Kupplungsvorrichtung 12 außer Eingriff kommen. Darauf wird der Antriebsmotor von der Steuervorrichtung, beispielsweise ein Schrittschaltmotor und eine entsprechende Anzahl von Schaltschritten verdreht, bis sich die nächste Schweißelektrode 3 in der Arbeitsstellung befindet. Daraufhin werden die beiden Führungsdorne 18 derart verstellt, daß der Elektrodenhalter 2 auf die Lagervorrichtung 6 zubewegt wird und die Klauen der Kupplungsscheiben 13 und 14 der Kupplungsvorrichtung 12 ineinander greifen, sodaß der Elektrodenhalter 2 in seiner Lage gegenüber der Lagervorrichtung 6 fixiert ist. Danach wird die Spannschraube 9 der Fixiervorrichtung, wie beispielsweise auch durch entsprechende andere Antriebe gebildet sein kann, festgezogen, sodaß die Oberfläche des Ansatzes 5 an den diesen zugeordneten Anlageflächen der Lagervorrichtung 6 anliegt und eine vorbestimmte Flächenpressung erreicht wird, um einen vordefinierten Stromübergangswiderstand zwischen der Lagervorrichtung 6, welche über eine schematisch angedeutete Bandelektrode 38 mit einer Schweißstromquelle verbunden ist, mit den Schweißelektroden 3 ausreichend kontaktiert ist.

Durch die Anordnung der Kupplungsvorrichtung 12 wird dabei erreicht, daß die Übertragung der Zustellkräfte zur Anlage der Schweißelektrode 3 am Werkstück über diese Kupplungsvorrichtung 12 erfolgt und die aufeinanderliegenden Flächen der Lagervorrichtung 6 und des Ansatzes 5 von diesen Belastungen nicht beansprucht werden. Darüberhinaus ist zwischen den mit der Bandelektrode 38 verbundenen Teilen und anderen Maschinenteilen, beispielsweise dem Führungsdorn 18 der Führungsvorrichtungen 19 und 20 während des Schweißvorganges kein Kontakt gegeben, sodaß Lichtbogenbildungen zwischen diesen Teilen zuverlässig ausgeschaltet sind.

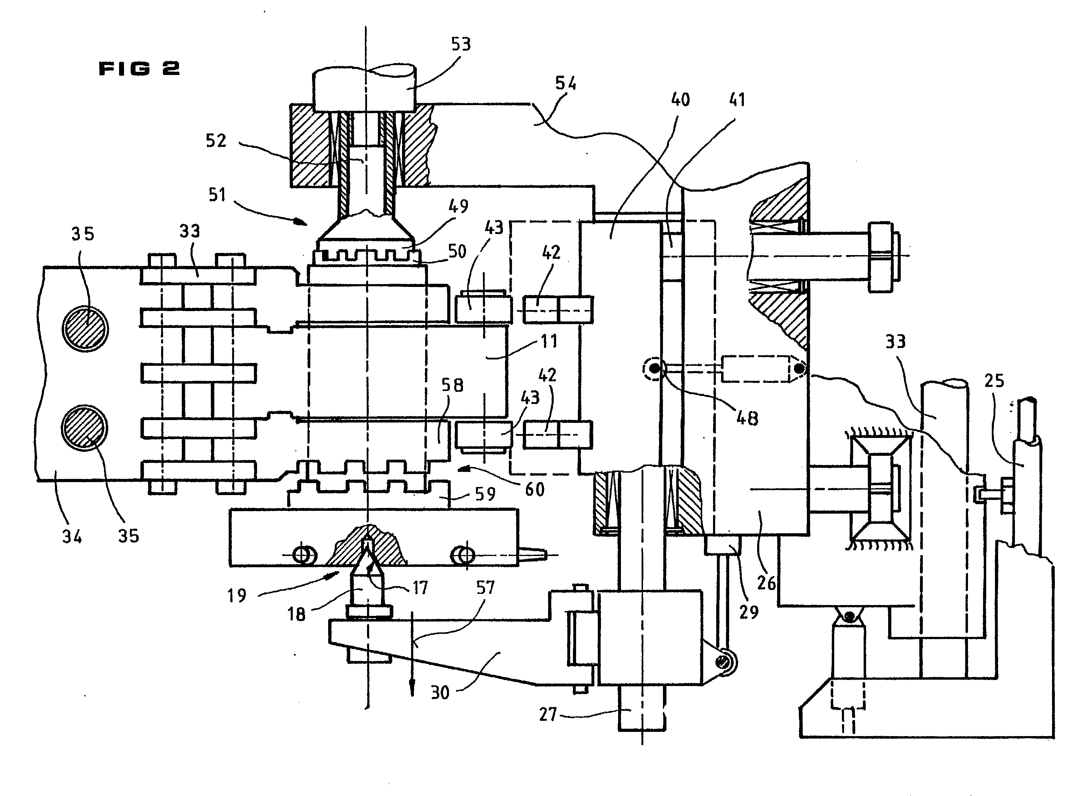

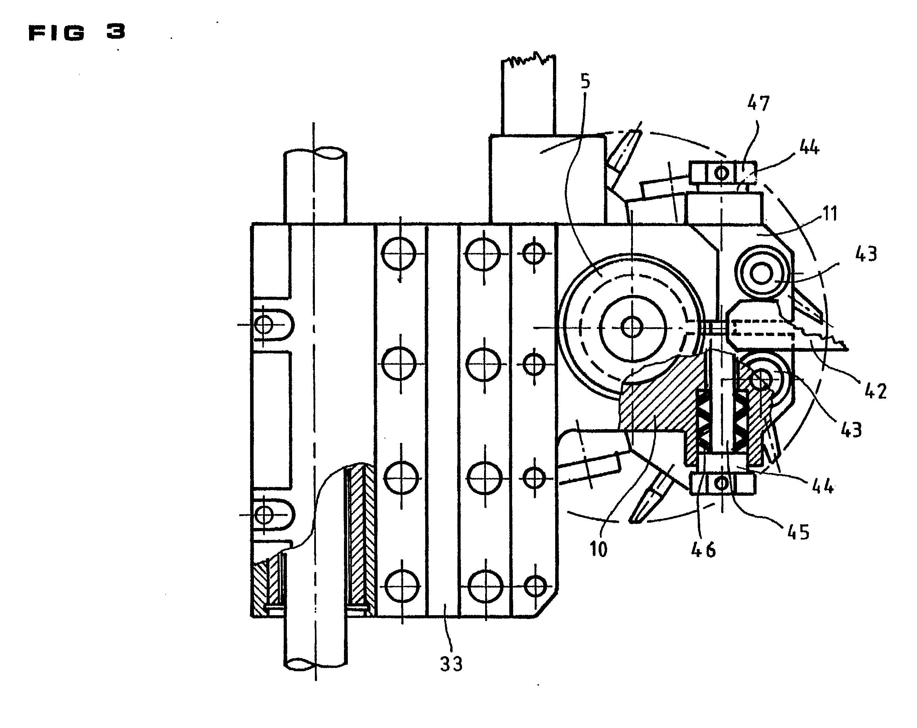

In den Fig.2 bis 4 ist eine konstruktive Ausführungsform der Wechseleinrichtung 1 für die Schweißelektroden 3 des Elektrodenhalters 2 gezeigt. Aus dieser etwas vereinfachten Darstellung einer derartigen Wechseleinrichtung 1 ist die dem Elektrodenhalter 2 zugewandte Führungsvorrichtung 19 mit dem Führungsdorn 18 ersichtlich, dem die Führungsbohrung 17 im Elektrodenhalter 2 zugeordnet ist. Der Führungsdorn 18 ist in Art eines Mitlaufkörners bei einer Drehmaschine ausgebildet und auf einem Schwenkarm 30 befestigt, der entlang von Führungssäulen 27 relativ gegenüber dem Elektrodenhalter 2 bzw. der Lagervorrichtung 6 verstellbar ist. Die Führungssäulen 27 sind in einem Gehäuse 26 gelagert, welches entlang von fix am Maschinentisch einer Schweißmaschine bzw. einer Arbeits- bzw. Bearbeitungsstation mit einer Schweißeinrichtung im Zuge einer vollautomatischen Montageanlage fix abgestützt Führungssäulen 39 mit einem Antrieb, z.B. kolbenstangenlosen Zylinder verstellbar ist. Im Gehäuse 26 ist ein Zwischenträger 40 über Führungssäulen 41 abgestützt, der mit zwei Spreizkeilen 42, die der Lagervorrichtung 6 zugeordnet sind, versehen ist. Diesen Spreizkeilen 42 sind Stützrollen 43 zugeordnet, die fix auf zwei Schenkeln 10,11 der U-förmig ausgebildeten Lagervorrichtung angeordnet sind. Wie insbesondere aus Fig.3 zu entnehmen ist, werden die beiden U-förmigen Schenkel 10, 11, über auf Stützscheiben 44 eines Distanzbolzens 45 abgestützte Federn 46 aufeinander zugepreßt. Die Vorspannung der Federn 46 ist mittels auf dem Distanzbolzen 45 angeordneter Einstellmuttern 47 einstellbar. Werden die Spreizkeile 42 aus der in Fig.2 gezeigten, in welcher der Ansatz 5 durch die Federn 46 in der Lagervorrichtung 6 spielfrei eingespannt ist in Stellung, die in Fig. 3 mit vollen Linien gezeigte geöffnete Stellung vorgeschoben, so werden entgegen der Wirkung der Federn 46 die Stützrollen 43 auseinandergedrückt, sodaß der Ansatz 5 von der Lagervorrichtung 6 freigegeben wird. Bevor nun die Spreizkeile 42 durch das Verschieben des Zwischenträgers 40 auf den Führungssäulen 41 mit einem Spreizantrieb 48, beispielsweise einer hydraulischen oder pneumatischen Zylinderkolbenanordnung, aus der in Fig.2 in vollen Linien gezeichnete in die in strichlierten Linien gezeichnete bzw. in Fig.3 in vollen Linien gezeichnete Stellung vorgeschoben werden, wird das Gehäuse 26 entlang der Führungssäulen 39 mit dem dem Gehäuse 26 zugeordneten An trieb in Richtung auf die Lagervorrichtung 6 zu verstellt, bis sich die Kupplungsscheiben 49 und 50 in Eingriff befinden. Diese Kupplungsscheiben 49,50 bilden eine Führungsvorrichtung 51, d.h. sie dienen zur Lagestabilisierung des von der Führungsvorrichtung 19 abgewendeten Endes des Ansatzes 5. Die voneinander getrennte Stellung der Kupplungsscheiben 49 und 50 entspricht im wesentlichen der Stellung der Kupplungsscheiben 22 und 23 nach Fig.1.

Die Kupplungsscheibe 49 ist über eine Welle 52 mit einem als Antriebsmotor 53 dienenden Drehzylinder verbunden.

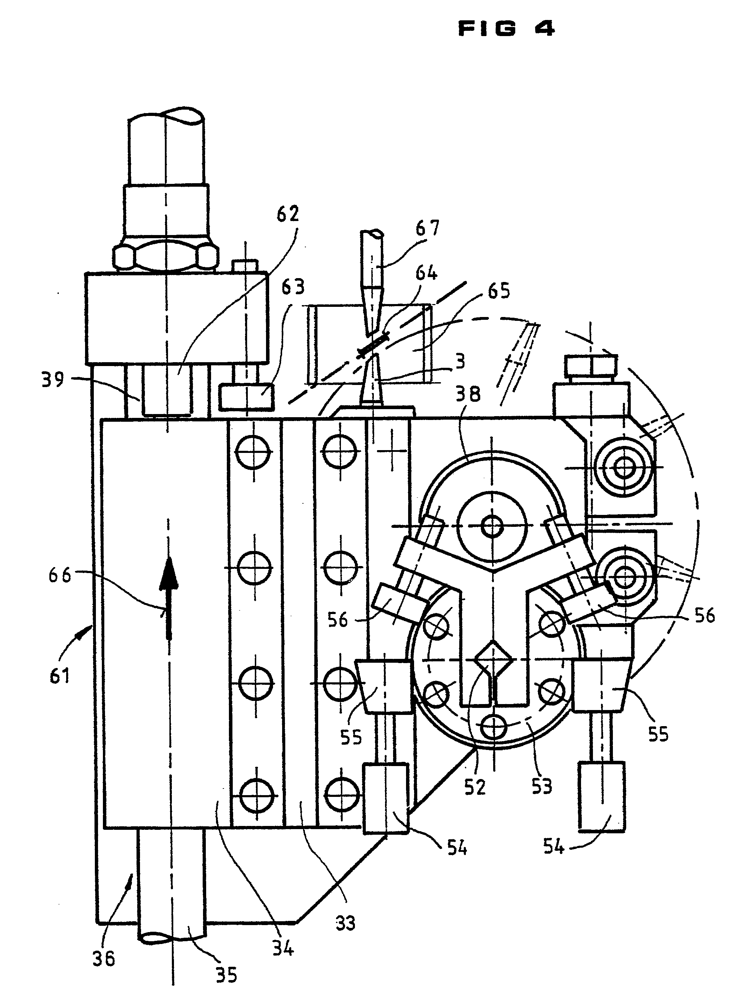

Diesem besser aus Fig.4 ersichtlichen Drehzylinder sind auf einem die Welle 52 lagernden Gehäuseteil 54 angeordnete Endanschläge 55 zugeordnet, die den Drehwinkel des Drehzylinders durch an dem von der Kupplungsscheibe 49 abgewendeten Ende der Welle 52 - die in diesem Bereich mehreckig ausgebildet ist - angeordnete und mit dieser verschwenkbare Anschläge 56 und somit den Schwenkwinkel der Kupplungsscheiben 49,50 begrenzen.

Ist das Gehäuse 26 und der Gehäuseteil 54 gegenüber der Lagervorrichtung 6 soweit verschoben, daß die beiden Kupplungsscheiben 49,50 ineinander greifen und der Führungsdorn 18 in der Führungsbohrung 17 abgestützt, so können die Spreizkeile 42 zwischen die Stützrollen 43 eingepreßt und die Welle 52 um das durch die Anschläge 56 vorgesehene Ausmaß gemeinsam mit dem Elektrodenhalter 2 soweit verschwenkt werden, daß die nächstfolgende Schweißelektrode 3 sich in der gewünschten Arbeitsposition - wie in Fig.4 gezeigt - befindet. Diese Verdrehung des Elektrodenhalters 2 setzt voraus, daß nach dem Eingriff der Führungsvorrichtung 19 und 51 der Elektrodenhalter 2 mit dem Ansatz 5 durch eine gemeinsame Bewegung der Gehäuseteil 54 und das Gehäuse 26 in Richtung eines Pfeiles 57 Kupplungsteile 58,59 einer Kupplungsvorrichtung 60 außer Eingriff gebracht sind.

Im Anschluß an das erfolgte Verschwenken des Elektrodenhalters 2 mittels des Antriebsmotors 53 und der im Eingriff stehenden Kupplungsscheibe 49,50 ist die gewünschte Arbeitsposition der nächstfolgenden Schweißelektrode 3 gegeben. Nach Abschluß der Schwenkbewegung des Elektrodenhalters 2 wird in einer dem Pfeil 57 entgegengesetzen gemeinsamen Bewegung des Gehäuseteiles 54 des Gehäuses 26 die Kupplungsvorrichtung 60 in Eingriff gebracht. Durch das horizontale Verfahren der Spreizkeile 42 aus dem Bereich der Stützrollen 43, wie in Fig.3 strichliert dargestellt, in eine Endposition wie in Fig.2 gezeigt, werden die Schenkel 10,11 der Lagervorrichtung 6 durch Wirkung der Federn 46, der Fixiervorrichtung 8 aufeinander zugepreßt, wobei der Ansatz 5 und damit der Elektrodenhalter 2 in der eingenommenen Position mit einer auf den Bedarf abgestimmten Spannkraft fixiert wird.

Dabei ist es unerheblich, ob diese Spannkraft, wie dargestellt, mittels einjustierbarer Federkraft über die Federn 46 aufgebracht wird oder aber mittels jedem anderen denkbaren und in seiner Wirkung dosierbaren Spannsystem, z.B. Elektromagnete mit verbundenen Kolbenzylinderanordnungen. Die über die Schweißelektroden 3 in den Elektrodenhalter 2 eingebrachten Abstützkräfte während des Schweißens sind nicht maßgeblich für die Dimensionierung der Fixiervorrichtung 8, da diese Abstützkräfte von der in Eingriff stehenden Kupplungsvorrichtung 60 aufgenommen werden. Ist der Elektrodenhalter 2 in seiner gewünschten Position nach Ablauf des oben beschriebenen Vorganges fixiert, kann durch entsprechende vertikale Bewegung des Schwenkarmes 30 mit dem Verstellantrieb 29 die Führungsvorrichtung 19 und durch ein Verstellen des Gehäuses 26 die Führungsvorrichtung 51 außer Eingriff gebracht werden.

Damit stellt der Elektrodenhalter 2 einen von den übrigen Anlagenteilen elektrisch vollkommen getrenntes Bauelement dar, welches über eine Bandelektrode 38 versorgt wird. Er ist durch Iso lierelemente 33 und damit elektrisch getrennt am Halter 34 gelagert. Der Halter 34 ist entlang von Führungssäulen 35 verfahrbar, die einen Teil einer Vorschubvorrichtung 61 - dargestellt in Fig.4 - bildet.

Diese Vorschubvorrichtung 61 besteht im wesentlichen aus dem Halter 34, den Führungssäulen 35, dem Verstellantrieb und einem der Hubbegrenzung dienenden Stoßdämpfer 62 sowie einem Anschlag 63. Zur Durchführung eines Arbeitsprozesses, beispielsweise einer Impulsschweißung an einem Werkstück 64, das auf einem Werkstückträger 65 positioniert wird z.B. mittels geeignetem Förderer wird der Halter 34 und die an dieser mittels Isolierelement 33 festgehaltene Lagervorrichtung 6 mit dem Elektrodenhalter 2 durch entsprechende Druckbeaufschlagung des Verstellantriebes in Richtung des Pfeiles 66 bewegt. Dadurch wird die Schweißelektrode 3 in Richtung des Werkstückes 64 geführt und übt im Zusammenwirken mit einer Gegenelektrode 67 die für den einwandfreien Prozeßablauf erforderliche Anpreßkraft auf das Werkstück 64 aus. Der Verstellantrieb, beispielsweise ein doppelt wirkender druckbeauftragter Zylinder, steht vorzugsweise mit einer Steuer- und Regeleinrichtung in Verbindung, um die für die Qualität des Arbeitsprozesses entscheidende Preßkraft wählbar und reproduzierbar zu gestalten. Nach Beendigung des Schweißvorganges wird der Halter 34 mittels des Verstellantriebes entgegen der Richtung des Pfeil 66 bewegt und dadurch die Schweißelektrode 3 vom nun fertigen Werkstück 64 abgerückt und wird im Bedarfsfall, vorzugsweise aktiviert durch ein vorgegebenes Programm, an der dem Anschlag 63 entgegengesetzt liegenden Endposition der Vorschubvorrichtung 61 die nächstfolgende Schweißelektrode durch entsprechendes Schwenken des Elektrodenhalters 2 in die erforderliche Arbeitsposition gebracht.

Der Vorteil der erfindungsgemäßen Ausbildung einer Wechseleinrichtung für Schweißelektroden 3 liegt in der raschen Möglichkeit, mehrere Schweißelektroden 3 aufeinanderfolgend zum Einsatz zu bringen, um damit dem Elektrodenverschleiß Rechnung tragend eine hohe Zahl von Arbeitszyklen zu erhalten, bei gleichzeitiger Minimierung des Maschinenrüstaufwandes. Weiters bietet die erfindungsgemäße Anwendung durch die konstruktive Ausbildung und Systemtrennung der für die Stromübertragung und für die Kraftaufbringung maßgeblichen Bauelemente stets gleichbleibende und einwandfreie und damit für die Qualität des Schweißprozesses entscheidende Vorteile.

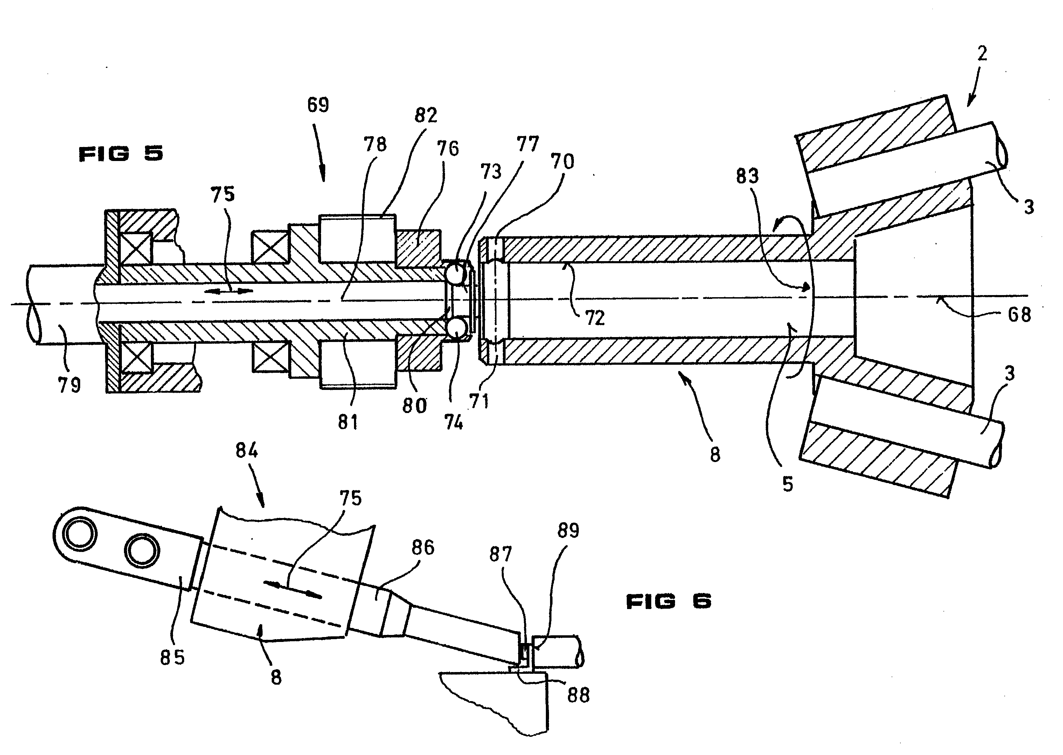

In Fig.5 ist ein Elektrodenhalter 2 gezeigt, in welchem auswechselbare Schweißelektroden 3 eingesetzt sind. Der Elektrodenhalter 2 besteht aus einem Rotationskörper, in dessen senkrecht zu einer Längsachse 68 verlaufenden Stirnseite die Schweißelektroden 3 in etwa parallel zur Längsachse 68 bzw. dazu geneigt angeordnet sind. Der Elektrodenhalter 2 ist mit einem Ansatz 5 versehen, dem eine Fixiervorrichtung 8, wie sie beispielsweise in Fig.1 beschrieben ist, zugeordnet sein kann. Zur Halterung, Führung und Verstellung des Elektrodenhalters 2 bei gelöster Fixiervorrichtung 8 dient eine kombinierte Führungs- und Verstellvorrichtung 69. Diese besteht aus durch Ausnehmungen 70,71 gebildeten Kupplungsteilen, die in einer Bohrung 72 im Bereich des vom Elektrodenhalter 2 abgewendeten Endes angeordnet sind.

Diesen sind als gegenüberliegende Kupplungsteile der Kupplungsvorrichtung 60 Kugeln 73 und 74 zugeordnet, die auf einem in Richtung der Längsachse 68 entsprechend einem Doppelpfeil 75 verstellbaren Schlitten 76 gelagert sind. Die Kugeln 74 befinden sich in ihrer Ruhestellung zwischen dem Schlitten 76 und einer Druckplatte 77. Eine Führungsstange 78 ist in Richtung des Doppelpfeiles 75 relativ zum Schlitten 76 mit einem Antrieb 79 verstellbar. Nachdem der Schlitten 76 aus der in vollen Linien gezeichneten in die mit strichlierten Linien angedeutete Stellung zur Anlage an den Ansatz 5 in Richtung des Elektrodenhalters 2 vorgeschoben wurde, wird die Führungsstange 78 relativ zum Schlitten 76 in Richtung des Elektrodenhalters 2 bewegt, wobei ein kegelförmiger Ansatz 80 die Kugeln 74 in radialer Richtung auseinanderpreßt und in den Ausnehmungen 70,71 verkeilt. Dadurch ist der Ansatz 5 und somit der Elektrodenhalter 2 in allen Richtungen mit dem Schlitten 76 verbunden. Nach dem eine der Kugeln 74 und die die Führungsstange 78 lagernde Hohlwelle mit einem Antriebsorgan, beispielsweise einem Zahnriemen 82 drehfest gekuppelt ist, kann durch eine Verstellung des Zahnriemens 82 über einen Antriebsmotor die Hohlwelle 81 und der mit dieser bewegungsverbundene Ansatz 5 sowie damit der Elektrodenhalter 2 im Sinne eines Pfeiles 83 verschwenkt werden. Dadurch können die hintereinander angeordneten Schweißelektroden 3 aufeinanderfolgend zum Einsatz gebracht werden.

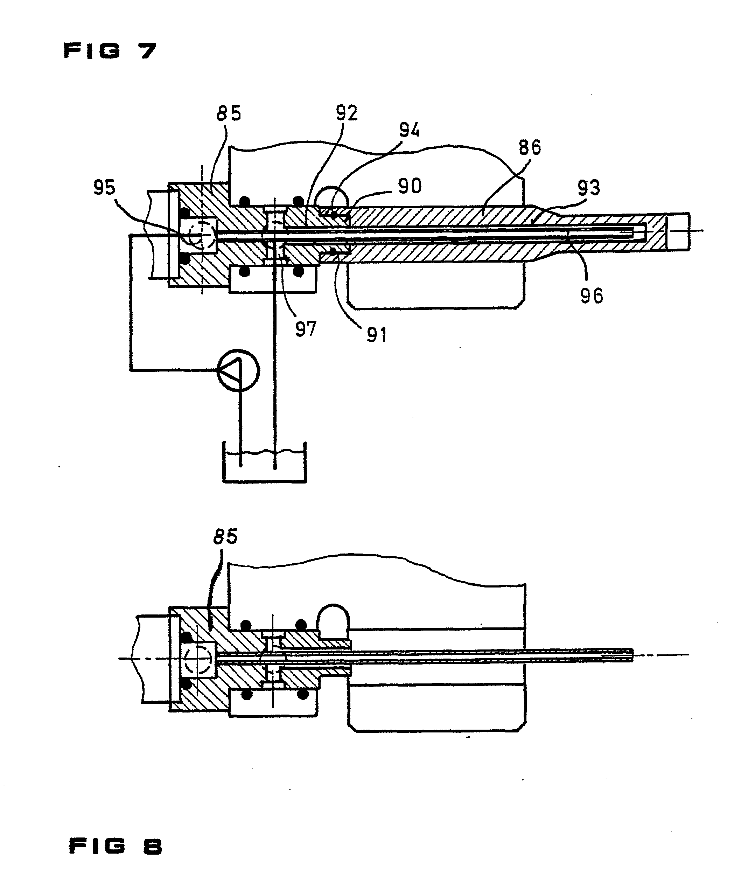

In Fig.6 ist ein Elektrodenhalter 84 gezeigt, in welchem ein Einsatzteil 85 und eine auswechselbare Schweißelektrode 86 angeordnet ist. Die Schweißelektrode dient zum Festschweißen eines Bauteiles 87 auf einem Gehäuse 88, an welchem eine Gegenelektrode 89 anliegt. Zum Fixieren der Schweißelektrode 86 ist eine Fixiervorrichtung 8 vorgesehen, die beispielsweise entsprechend der Ausführungsform in Fig.1 bzw. 2 ausgebildet sein kann. Nach dem Lösen der Fixiervorrichtung 8 kann die Schweißelektrode 86 in Richtung eines Doppelpfeiles 75 relativ zum Einsatzteil 85 verstellt werden.

Wie besser aus den Fig.7 und 8 zu ersehen ist, weist der Einsatzteil 85 einen zapfenförmigen Ansatz 90 auf, auf den die Schweißelektrode 86 mit einer Führungsbohrung 91 aufschiebbar ist. Zur Abdichtung des Überganges zwischen dem Einsatzteil 85 und der Schweißelektrode 86 bzw. der in diesen angeordneten Bohrungen 92,93 ist ein Dichtring 94 vorgesehen. Der Einsatzteil 85 weist auf seiner von der Schweißelektrode 86 abgeordneten Stirnseite eine Einströmöffnung 95 für ein in diesen befestigtes Rohr 96 auf, welches über den Ansatz 90 hinaus vorkragt, und zwar im wesentlichen über eine Länge, der im Inneren der Schweißelektrode 86 angeordneten Bohrung 93. Zwischen dem Ansatz 90 und der Einströmöffnung 95 ist eine weitere Einströmöffnung 97 angeordnet, die mit den Bohrungen 92 und 93 verbunden ist. Dadurch ist es möglich, Kühlflüssigkeit von der Einströmöffnung 95 über das Rohr 96 bis in den Endbereich der Schweißelektrode 86 zu verbringen und diese erwärmte Kühlflüssigkeit über die Bohrungen 93,92 und die Einströmöffnung 97 abzuziehen. Dadurch ist es möglich, bei einer auswechselbaren Schweißelektrode eine Kühlung bis in den vorderen Endbereich an der Schweißstelle vorzunehmen. Als Kühlmittel können unterschiedliche Flüssigkeiten verwendet werden, wobei - wie schematisch angedeutet - die Bohrung 92 und 93 mit einem Tank und die Einströmöffnung 95 über eine Pumpe mit diesem Tank verbunden sein kann, um eine Umwälzung des Kühlmittels zu erreichen. Selbstverständlich kann die Ausführung der Kühleinrichtung für die Schweißelektrode 86 auch eine eigenständige Erfindung darstellen, da dadurch die Standzeit der Schweißelektrode 86 zwischen den Wechselvorgängen erhöht werden kann.

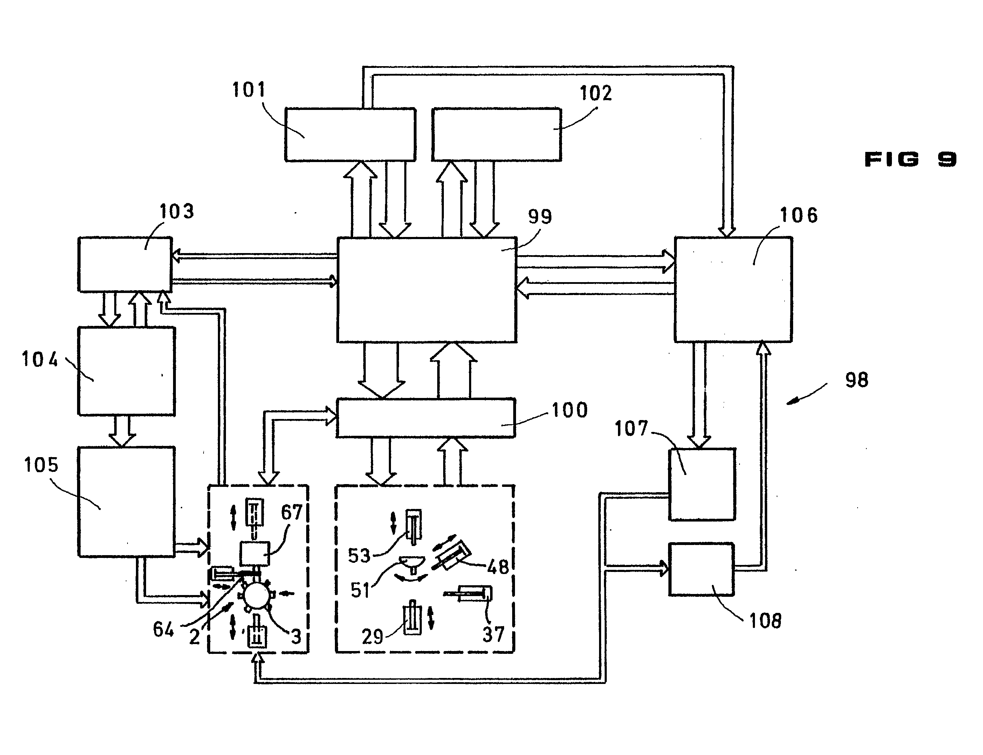

In Fig.9 ist ein Blockschaltbild einer Steuervorrichtung 98 für eine Schweißstation mit einer Wechseleinrichtung für die Schweißelektroden 3 im Zuge einer Arbeits- bzw. Bearbeitungsstation einer vollautomatischen Montagemaschine dargestellt. Diese umfaßt eine Steuerung 99 der Type Sucor PS 24, einen Umsetzer 100 für die Ein- und Ausgangssignale, die mit dem Antriebsmotor 53, der Führungsvorrichtung 51, dem Verstellantrieb 29 und 37 sowie dem Spreizantrieb 48, wie dies schematisch angedeutet ist, verbunden sind.

Der Steuerung sind weiters Bedienfelder 101 und 102 für die Steuerung 99 einer Schweißstromüberwachungsvorrichtung 103, ein Schweißregelgerät 104 und ein Schweißtrafo 105 zugeordnet. Weiters steht die Steuerung mit einer Druckluftsteuereinheit 106 und einer Schweißdruckregelvorrichtung 107 in Verbindung. Die Schweißdruckregelung erfolgt mit der Schweißdruckregelvorrichtung 107 über einen Drucksensor 108.

Die gezeigte Ausführungsform der Steuervorrichtung stellt nur eine der möglichen Ausführungsvarianten für eine Wechseleinrich tung nach den Fig.2 bis 4 dar und kann im Rahmen des fachmännischen Könnens beliebig abgewandelt werden

Das Flußdiagramm für die Wechseleinrichtung in der Steuerung 99 ist folgendermaßen: Schweißprogramm mit Elektrodenwechsel und Schweißkopfwechsel
Programmanfang:
Hauptprogramm
Unterprogramm 1: Schweißelektrode wechseln
Unterprogramm 2: Elektrodenhalterwechsel
Unterprogramm 3: Schweißen
Programmende - Hauptprogamm

Unterprogramm 1: Schweißelektrode wechseln
Programmanfang - Unterprogramm 1:
Eingestellte Schweißzahl pro Schweißelektrode 2 erreicht?
Schweißelektrode wechseln? (Handstart)
Schweißelektrodenzähler = 7 (alle Schweißelektroden gebraucht - wenn ja - Elektrodenhalterwechsel)
Elektrodenhalter 2 zu Wechselstellung
Führungsdorn 18 abwärts
Spreizkeile 42 ausfahren (Fixiervorrichtung entspannen)
Führungsdorn 18 und Kupplungsscheibe 23 abwärts
Elektrodenhalter 2 um eine Teilung drehen (Kupplungsscheibe 23 mit Antriebsmotor 24 drehen)
Führungsdorn 18 und Kupplungsscheibe 23 aufwärts
Spreizkeile 42 einfahren (Elektrodenhalter 2 bzw. Ansatz 5 spannen)
Führungsdorn 18 abwärts
Kupplungsscheibe 23 in Ausgangsstellung zurückdrehen
Elektrodenhalter in Ausgangsstellung für Schweißen
Schweißzähler löschen
Schweißelektrodenzähler erhöhen
Programmende - Unterprogramm 1
Unterprogramm 2: Elektrodenhalterwechsel
Programmanfang - Unterprogamm 2

Schweißelektrodenzähler = 7 und eingestellte Schweißzahl pro Schweißelektrode erreicht?
Elektrodenhalter wechseln? (Handstart)
Elektrodenhalter zur Wechselstellung
Führungsdorn 18 aufwärts (Elektrodenhalter halten)
Spreizkeil 42 ausfahren (Fixiervorrichtung 8 entspannen)
Führungsdorn 18 abwärts (Elektrodenhalter absenken)
Alten Elektrodenhalter von Hand entnehmen
Neuen Elektrodenhalter von Hand einsetzen
Führungsdorn 18 aufwärts (Elektrodenhalter 2 anheben)
Spreizkeile 42 einfahren (Fixiervorrichtung 8 spannen)
Führungsdorn 18 abwärts
Elektrodenhalter 2 zur Ausgangsstellung
Schweißelektrodenzähler und Schweißzähler löschen
Programmende - Unterprogramm 2

Unterprogramm 3: Schweißen

Bei einer entsprechend den vorstehend geschilderten Programmablauf ausgearbeiteten Software für die Steuerung 99 können die Schweißelektroden 3 mit einer in den Fig. 2 bis 4 dargestellten Wechseleinrichtung ausgewechselt werden.

<u>Bezugszeichenaufstellung</u>

1 Wechseleinrichtung
2 Elektrodenhalter
3 Schweißelektrode
4 Aufnahme
5 Ansatz
6 Lagervorrichtung
7 Öffnung
8 Fixiervorrichtung
9 Spannschraube
10 Schenkel
11 Schenkel
12 Kupplungsvorrichtung
13 Kupplungsscheibe
14 Kupplungsscheibe
15 Drehachse
16 Doppelpfeil
17 Führungsbohrung
18 Führungsdorn
19 Führungsvorrichtung
20 Führungsvorrichtung

21 Verstellvorrichtung
22 Kupplungsscheibe
23 Kupplungsscheibe
24 Antriebsmotor
25 Verstellantrieb
26 Gehäuse
27 Führungssäule
28 Pfeil
29 Verstellantrieb
30 Schwenkarm
31 Pfeil
32 Pfeil
33 Isolierelement
34 Halter
35 Führungssäule
36 Führungsbahn
37 Verstellantrieb
38 Bandelektrode
39 Führungssäule
40 Zwischenträger
41 Führungssäule
42 Spreizkeil
43 Stützrolle
44 Stützscheibe
45 Distanzbolzen
46 Feder
47 Einstellmutter
48 Spreizantrieb
49 Kupplungsscheibe
50 Kupplungsscheibe
51 Führungsvorrichtung
52 Welle
53 Antriebsmotor
54 Gehäuseteil
55 Endanschlag
56 Anschlag
57 Pfeil
58 Kupplungsteil
59 Kupplungsteil
60 Kupplungsvorrichtung
61 Vorschubvorrichtung
62 Stoßdämpfer
63 Anschlag
64 Werkstück
65 Werkstückträger
66 Pfeil
67 Gegenelektrode
68 Längsachse
69 Führungs- und Verstellvorrichtung
70 Ausnehmung
71 Ausnehmung
72 Bohrung
73 Kugel
74 Kugel
75 Doppelpfeil
76 Schlitten
77 Druckplatte
78 Führungsstange
79 Antrieb
80 Ansatz
81 Hohlwelle
82 Zahnriemen
83 Pfeil
84 Elektrodenhalter
85 Einsatzteil

86 Schweißelektrode
87 Bauteil
88 Gehäuse
89 Gegenelektrode
90 Ansatz
91 Führungsbohrung
92 Bohrung
93 Bohrung
94 Dichtring
95 Einströmöffnung
96 Rohr
97 Einströmöffnung
98 Steuervorrichtung
99 Steuerung
100 Umsetzer
101 Bedienfeld
102 Bedienfeld
103 Schweißstromüberwachungsvorrichtung
104 Schweißregelgerät
105 Schweißtrafo
106 Druckluftsteuereinheit
107 Schweißdruckregelvorrichtung
108 Drucksensor

**Patentansprüche**

1. Wechseleinrichtung für mehrere aufeinanderfolgend eingesetzte und in einem für diese gemeinsamen Elektrodenhalter (2, 84) angeordnete Schweißelektroden (3), mit einer Fixiervorrichtung für den in einer Lagervorrichtung (6) verstellbar gehalterten Elektrodenhalter (2, 84) und mit einer Zustellvorrichtung (37) für die Lagervorrichtung sowie einer Stromquelle für die Schweißelektroden, dadurch gekennzeichnet, daß dem Elektrodenhalter (2,84) eine Führungsvorrichtung (19, 20, 51) zugeordnet ist und der Elektrodenhalter (2, 84) und die Führungsvorrichtung (20) mit gegengleichen, bedarfsweise zur Drehung des Elektrodenhalters in Eingriff bringbaren Kupplungsteilen (22, 23, 70, 71, 73, 74) einer Kupplungsvorrichtung versehen sind und daß dem Elektrodenhalter (2, 84) zur Verstellung relativ zur Lagervorrichtung (6) eine Verstellvorrichtung (21) zugeordnet ist und daß die Schweißelektroden (3) über die Lagervorrichtung (6) mit der Stromquelle, z.B. Schweißtrafo (105), verbunden sind.

2. Wechseleinrichtung nach Anspruch 1, dadurch gekennzeichnet, daß zumindest ein Kupplungsteil (22, 23) der Kupplungsvorrichtung mit der Verstellvorrichtung (21) gekuppelt ist.

3. Wechseleinrichtung nach einem der Ansprüche 1 oder 2, dadurch gekennzeichnet, daß die Lagervorrichtung (6) als Klemmvorrichtung ausgebildet ist und zwei mittels einer Fixiervorrichtung (8) relativ gegenüber dem Elektrodenhalter (2, 84) verstellbare Klemmbacken umfaßt.

4. Wechseleinrichtung nach einem der Ansprüche 1 bis 3, dadurch gekennzeichnet, daß die Lagervorrichtung (6) U-förmig ausgebildet ist und die beiden Schenkel (10, 11) die Klemmbacken bilden und in deren Endbereich die Fixiervorrichtung (8) angeordnet ist, welche auf die beiden Schenkel (10, 11) eine aufeinander zugerichtete Spannkraft ausübt.

5. Wechseleinrichtung nach einem der Ansprüche 1 bis 4, dadurch gekennzeichnet, daß die U-förmige Lagervorrichtung (6) im Bereich des Steges über eine Isoliervorrichtung mit der Zustellvorrichtung verbunden ist.

6. Wechseleinrichtung nach einem der Ansprüche 1 bis 5, dadurch gekennzeichnet, daß der Elektrodenhalter (2,84) mit einem zylinder- oder prismenförmigen Ansatz (5) bewegungsverbunden ist, der in einer zwischen den Schenkeln (10,11) und bzw. oder dem Steg befindlichen Aufnahmekammer der Lagervorrichtung (6) angeordnet und von diesem umfaßt ist, wobei eine Querschnittsform der Aufnahmekammer einer Querschnittsform des Ansatzes (5) entspricht.

7. Wechseleinrichtung nach einem der Ansprüche 1 bis 6, dadurch gekennzeichnet, daß der Elektrodenhalter (2,84) plattenförmig ausgebildet ist und an dessen umlaufender Stirnfläche Aufnahmen für die Schweißelektroden (3) angeordnet sind und daß der Ansatz (5) senkrecht zur plattenförmigen Oberfläche angeordnet ist und in seinem von der Oberfläche distanzierten Endbereich mit einer Kupplungsscheibe (22) verbunden ist.

8. Wechseleinrichtung nach einem der Ansprüche 1 bis 7, dadurch gekennzeichnet, daß auf der dem Ansatz (5) gegenüberliegenden Oberfläche ein weiterer Kupplungsteil angeordnet ist, der vorzugsweise als konischer Führungszapfen ausgebildet ist.

9. Wechseleinrichtung nach einem der Ansprüche 1 bis 8, dadurch gekennzeichnet, daß die den beiden Kupplungsteilen der Lagervorrichtung (6) zugeordneten verstellbaren Kupplungsteile der Kupplungsvorrichtung entlang einer in radialer Richtung zum Ansatz (5) verlaufenden Führungsbahn gemeinsam verstellbar gelagert sind und in axialer Richtung zum Ansatz (5) unabhängig voneinander und relativ zueinander verstellbar sind.

10. Wechseleinrichtung nach einem der Ansprüche 1 bis 9, dadurch gekennzeichnet, daß die Kupplungsvorrichtung als Klauenkupplung ausgebildet ist und der am Ansatz (5) angeordnete Kupplungsteil und der dieser gegenüberliegende Kupplungsteil der Führungsvorrichtung (19,20) jeweils durch eine Kupplungsscheibe (22,23) gebildet ist.

11. Wechseleinrichtung nach einem der Ansprüche 1 bis 10, dadurch gekennzeichnet, daß der dem Führungsdorn (18) gegenüberliegende Kupplungsteil der Führungsvorrichtung (19,20) durch eine sich konisch verjüngende Führungsbohrung (17) gebildet ist.

## Claims

1. A replacing mechanism for several successively inserted welding electrodes (3) situated within an electrode holder (2, 84) common to them, comprising a securing device for the electrode holder (2, 84) displaceably held in a bearing device (6) and a feed device (37) for the bearing device as well as a source of current for the welding electrodes, characterized in that a guiding device (19, 20, 51) is associated with the electrode holder (2, 84) and the electrode holder ( 2, 84) ad the guiding device (20) are provided with coupling elements (22, 23, 70, 71, 73, 74) of a coupling device which are matched and may be placed in engagement if need be for rotation of the electrode holder, and that a displacing mechanism (21) is associated with the electrode holder (2, 84) for displacement with respect to the bearing device (6) and that the welding electrodes (3) are connected via the bearing device (6) to the source of current, e.g. a welding transformer (105).

2. A replacing mechanism according to claim 1, characterized in that at least one coupling element (22, 23) of the coupling device is coupled to the displacing mechanism (21).

3. A replacing mechanism according to one of claims 1 and 2, characterized in that the bearing device (6) is formed as a gripping device and comprises two gripping jaws movable relative to the electrode holder (2, 84) by means of a securing device (8).

4. A replacing mechanism according to one of claims 1 to 3, characterized in that the bearing device (6) is formed in a U-shape and the two branches (10, 11) from the gripping jaws and extend the securing device (8), which exerts force tensioning the two branches (10, 11) in a direction one against the other, is arranged in their end region.

5. A replacing mechanism according to one of claims 1 to 4, characterized in that the U-shaped bearing device (6) is joined in the region of the web to the feed mechanism via an insulating device.

6. A replacing mechanism according to one of claims 1 to 5, characterized in that the electrode holder (2, 84) is coupled for movement with a cylindrical or prismatic attachment (5) which is arranged and enflanked in a receiving chamber of the bearing device (6) present between the branches (10, 11) and/or the web, a cross-sectional shape of the receiving chamber corresponding to a cross-sectional shape of the attachment (5).

7. A replacing mechanism according to one of claims 1 to 6, characterized in that the electrode holder (2, 84) is made in plate-like form and receiving means for the welding electrodes (3) are situated on its circumferential end face and that the attachment (5) is arranged at right angles to the plate-shaped surface and is connected in its end region remote from the surface to a coupling plate (22).

8. A replacing mechanism according to one of claims 1 to 7, characterized in that another coupling element which is preferably formed as a tapered guide pin is arranged on the surface positioned opposite to the attachment (5).

9. A replacing mechanism according to one of claims 1 to 8, characterized in that the displaceable coupling elements of the coupling mechanism associated with the two coupling elements of the bearing device (6) are installed in a jointly displaceable manner along a guide track extending in radial direction with respect to the attachment (5) and are displaceable independently of one another and relative to one another in the axial direction with respect to the attachment (5).

10. A replacing mechanism according to one of claims 1 to 9, characterized in that the coupling mechanism is constructed as a claw coupling and the coupling element situated on the attachment (5) and the oppositely situated coupling element of the guiding device (19, 20) are each formed by a coupling plate (22, 23).

11. A replacing mechanism according to one of claims 1 to 10, characterized in that the coupling element of the guiding device (19, 20) located opposite the guide pin (18) is formed by conically tapering guide bore (17).

**Revendications**

1. Dispositif pour remplacer plusieurs électrodes de soudage (3) placées les unes derrière les autres et disposées dans un support d'électrodes (2, 84) qui leur est commun, avec un système de fixation pour le support d'électrodes (2, 84) retenu mobile dans un système d'appui (6) et avec un système d'avance (37) pour le système d'appui ainsi qu'une source de courant pour les électrodes de soudage, caractérisé en ce qu'au support d'électrodes (2, 84) est affecté un système de guidage (19, 20, 51) et le support d'électrodes (2, 84) et le système de guidage (20) sont pourvus de pièces d'accouplement (22, 23, 70, 71, 73, 74) d'un système d'accouplement qui sont diamétralement opposées et peuvent au besoin être mises en prise pour la rotation du support d'électrodes et en ce qu'au support d'électrodes (2, 84) est affecté un système de déplacement pour le déplacement relativement au système d'appui (6) et en ce que les électrodes de soudage (3) sont reliées, par le système d'appui (6), à la source de courant, par exemple, au transformateur de soudage (105).

2. Dispositif pour remplacer la revendication 1, caractérisé en ce qu'au moins une pièce d'accouplement (22, 23) du système d'accouplement est couplée au système de déplacement (21).

3. Dispositif pour remplacer selon l'une des revendications 1 ou 2, caractérisé en ce que le système d'appui (6) a la forme d'un système de serrage et comprend deux mâchoires de serrage réglables relativement au support d'électrodes (2, 84) au moyen d'un système de fixation (8).

4. Dispositif pour remplacer selon l'une des revendications 1 à 3, caractérisé en ce que le système d'appui (6) est en forme de U et les deux branches (10, 11) forment les mâchoires de serrage et le système de fixation (8) est disposé à leur parties extrêmes, qui exerce sur les deux branches (8, 11) un effort de tension l'une vis-à-vis de l'autre.

5. Dispositif pour remplacer selon l'une des revendications 1 à 4, caractérisé en ce que le système d'appui (6) en forme de U est relié, dans la zone du dos, par un système d'isolement, au système d'avance.

6. Dispositif pour remplacer selon l'une des revendications 1 à 5, caractérisé en ce que le support d'électrodes (2, 84) est relié, pour le mouvement, à une saillie de forme cylindrique ou prismatique (5) qui est placée dans une chambre de réception du système d'appui (6) qui se trouve entre les branches (10, 11) ou respectivement le dos et est entourée par celle-ci, la forme en section transversale de la chambre de réception correspondant à la forme en section transversale de la saillie (5).

7. Dispositif pour remplacer selon l'une des revendications 1 à 6, caractérisé en ce que le support d'électrodes (2, 84) est en forme de plaque et à sa surface frontale tournante sont disposés des logements pour les électrodes de soudage (3) et en ce que la saillie (5) est disposée perpendiculaire à la surfce en forme de plaque et est reliée, à sa partie extrême éloignée de la surface supérieure, à un disque d'accouplement (22).

8. Dispositif pour remplacer selon l'une des revendications 1 à 7, caractérisé en ce que sur la surface supérieure opposée à la saillie (5) est placée une autre pièce d'accouplement, qui a avantageusement la forme d'un tourillon conique de guidage.

9. Dispositif pour remplacer selon l'une des revendications 1 à 8, caractérisé en ce que les pièces d'accouplement mobiles du système d'accouplement qui sont affectées aux deux pièces d'accouplement du système d'appui (6) sont logées mobiles en commun le long d'une voie de guidage passant en direction radiale par rapport à la saillie (5) et sont mobiles en direction axiale par rapport à la saillie (5) indépendamment l'une de l'autre et relativement l'une à l'autre.

10. Dispositif pour remplacer selon l'une des revendications 1 à 9, caractérisé en ce que le système d'accouplement a la forme d'un accouplement à griffes et la partie d'accouplement disposée sur la saillie (5) et la partie d'accouplement qui lui fait face du système de guidage (19, 20) sont chacune formées d'une disque d'accouplement (22, 23).

11. Dispositif pour remplacer selon l'une des revendications 1 à 10, caractérisé en ce que la partie d'accouplement du système d'accouplement (19, 20) face à la broche de guidage (18) est formée d'un perçage de guidage (17) se rétrécissant coniquement.

**FIG 1**

FIG 2

FIG 3

# FIG 4

**FIG 5**

69 82
78 76
75 73 77 70
83 2
3
72 68
79 80 74 5 8 3
81 71 8

84 **FIG 6**
75
86 89
87
85 8 88

EP 0 254 931 B1

FIG 7

FIG 8

FIG 9

EP 0 254 931 B1